(19) Europäisches Patentamt
European Patent Office
Office européen des brevets

(11) **EP 4 317 251 B1**

(12) **EUROPEAN PATENT SPECIFICATION**

(45) Date of publication and mention of the grant of the patent:
**16.09.2026 Bulletin 2026/38**

(21) Application number: **22778699.3**

(22) Date of filing: **23.03.2022**

(51) International Patent Classification (IPC):
***C08G 65/26*** *(2006.01)* ***C09D 171/02*** *(2006.01)*
***C08G 59/22*** *(2006.01)* ***C08G 59/24*** *(2006.01)*
***C08G 59/40*** *(2006.01)*

(52) Cooperative Patent Classification (CPC):
**C08G 65/2609; C08G 59/223; C08G 59/24; C08G 59/4071; C09D 171/02**

(86) International application number:
**PCT/CN2022/082545**

(87) International publication number:
**WO 2022/206516 (06.10.2022 Gazette 2022/40)**

# (54) OXETANE POLYMER, PREPARATION METHOD THEREFOR AND APPLICATION THEREOF, AND ENERGY CURABLE COMPOSITION

OXETANPOLYMER, HERSTELLUNGSVERFAHREN DAFÜR UND ANWENDUNG DAVON SOWIE ENERGIEHÄRTBARE ZUSAMMENSETZUNG

POLYMÈRE D'OXÉTANE, PROCÉDÉ DE PRÉPARATION ASSOCIÉ ET APPLICATION ASSOCIÉE ET COMPOSITION DURCISSABLE SOUS L'EFFET D'UNE ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2021 CN 202110359249**

(43) Date of publication of application:
**07.02.2024 Bulletin 2024/06**

(73) Proprietors:
- **Changzhou Tronly Advanced Electronic Materials Co., Ltd.
Changzhou, Jiangsu 213159 (CN)**
- **Changzhou Tronly New Electronic Materials Co., Ltd
Changzhou, Jiangsu 213011 (CN)**

(72) Inventor: **QIAN, Xiaochun
hangzhou, Jiangsu 213011 (CN)**

(74) Representative: **Grünecker Patent- und Rechtsanwälte
PartG mbB
Leopoldstraße 4
80802 München (DE)**

(56) References cited:
**CN-A- 101 472 973**
**CN-A- 112 341 617**
**CN-A- 112 341 617**
**JP-A- 2001 302 652**
**JP-A- 2008 056 942**
**JP-A- 2010 254 893**
**JP-A- 2010 254 893**
**JP-A- 2011 001 420**
**US-A1- 2008 213 568**
**US-A1- 2008 213 568**
**US-A1- 2009 181 263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 317 251 B1

## Description

The present application is based on and claims priority to Chinese application No. 202110359249.1 filed on October 2, 2019.

TECHNICAL FIELD

The invention belongs to the field of photoelectric materials, and in particular relates to an oxetane polymer, preparation method therefor and application thereof, and energy-curable composition.

BACKGROUND

The preparations and applications for hydroxy-containing oxetane monomer compounds have been widely reported. For example, Macromolecules, 38, 1640(2005) discloses the preparation for 3-ethyl-3-(6-hydroxyhexyl)oxymethyloxetane; JP2000302774A reports a method for reacting a sulfonate of 3-hydrocarbyl-3-hydroxymethyloxetane with a diol in the presence of a base; and WO2007142236A1 reports that a hydroxy-containing 3-ethyloxetane compound is obtained by reacting a diol compound with an oxetane compound containing an easy-leaving group under an alkaline condition. In these methods, the oxetanated monomers are not the sole product, and further treatments are required before use, with a low atom utilization rate.

JP2019023256A discloses an oxetane-containing lactone polymer and its preparation method. A series of oxetane lactone polymers are obtained by reacting a hydroxy-containing oxetane with different lactone compounds. They have the advantages of low volatility and low curing shrinkage, but the syntheses of such oligomers are restricted by the raw materials, and the costs are high. Moreover, tin chloride is used as the catalyst in the preparation process, and the products involve halogen residues, which will have negative effects on subsequent applications.

CN 112341617 A discloses a refining method of oxacycloalkyl-terminated polyether polyol. The refining method comprises the following steps: firstly, preparing basic polyether from 3-ethyl-3-epoxypropane methanol and alkylene oxide under the action of a catalyst sodium methoxide; reacting the basic polyether with methane chloride under the action of a catalyst sodium methoxide to obtain an oxa-naphthenic base terminated polyether polyol crude product; and finally, washing the oxa-naphthenic base terminated polyether polyol crude product with water, adding acid for neutralization, and carrying out adsorption, drying and filtration to obtain refined oxa-naphthenic base terminated polyether polyol, wherein the acid is oxalic acid or sulfuric acid; and in the adsorption step, an adsorbent and a filter aid are adopted for stirring adsorption, the adsorbent is magnesium silicate, and the filter aid is diatomite or acidic carclazyte.

US 2008/213568 A1 discloses polyether resins comprising a plurality of functional groups and obtained by polymerisation of a mixture of alkoxylated reactive compounds selected from a) alkoxylated compounds having a functionality of more than one, and b) alkoxylated monofunctional reactive compounds, wherein the alkoxylated part of the alkoxylated compounds having a functionality of more than one has an average molecular weight which is different from the average molecular weight of the alkoxylated part of the alkoxylated monofunctional reactive compounds.

JP 2010 254893 A discloses UV curable coatings based on oxetane oligomers.

SUMMARY

The object of the invention is to provide an oxetane polymer, preparation method therefor, application thereof, and energy-curable composition. This oxetane-based polymer has a simple synthesis process without the use of halogen-containing raw materials, the problems of halogen residues, and the generation of other associated products, and thus having a high atom utilization rate. It has a low cost and a low viscosity, and is convenient to use.

In order to achieve the above object, according to one aspect of the invention, there is provided a low-viscosity oxetane-based polymer having a structure represented by Formula (I):

(I)

wherein $R_1$ represents hydrogen or methyl, and the weight-average molecular weight of the polymer is between 250 and 1,100, and wherein the low-viscosity oxetane-based polymer has a viscosity at 25°C of 20-320 mPa*s (20-320 cps).

According to another aspect of the invention, there is provided a method for preparing the polymer represented by Formula (I) as above, including: reacting 3-ethyl-3-hydroxymethyloxetane with oxirane substituted by $R_1$ under an alkaline condition.

The reaction formula is shown below:

Without limitations, the alkaline condition may be achieved by adding one or a combination of two or more of sodium tert-butoxide, potassium tert-butoxide, sodium hydroxide, potassium hydroxide, sodium carbonate, potassium carbonate, etc. to the reaction system.

In the above preparation method, the raw materials used are all known compounds in the art. The reaction temperature is 80-160 °C. The reaction pressure is 0.01-0.5 MPa.

According to yet another aspect of the invention, it also relates to the application of the polymer represented by Formula (I) as above in the field of energy curing. Accordingly, the invention provides an energy-curable composition comprising the polymer represented by Formula (I) as above.

Further, the process for energy curing is particularly preferably photocuring or thermocuring. Suitably, the application fields include, but are not limited to, coatings, inks, adhesives, and the like.

DESCRIPTION OF EMBODIMENTS

Hereinafter, the present invention will be further described in detail with reference to specific examples, but it should not be understood as a limitation to the protection scope of the present invention.

In the invention, unless otherwise specified, the viscosity at 25°C is measured by a viscosity analyzer (Model: DV1, BROOKFIELD), and the weight-average molecular weight is measured by gel chromatography (Model: LC-20AD, Shimadzu, Japan). 1 cps = 1 mPa*s.

**Preparation Examples**

Example 1

To a 250 mL four-necked flask, 11.6 g of Raw material 1a and 0.1 g of potassium hydroxide were added, and heated to 120 °C under stirring. After adjusting the pressure of the reaction system to 0.2 MPa, 4.4 g of Raw material 1b was slowly introduced over about 30 min, and continued to stir for 2 h. Then the reaction was stopped to obtain a transparent liquid, that is, Polymer 1c. The measured viscosity was 23.95 cps (25 °C) and the measured weight-average molecular weight was 273.

Example 2

In accordance with Example 1, with other conditions unchanged, the difference lied in that Raw material 1b was introduced in an amount of 8.8 g, to obtain Polymer 2c with a measured viscosity of 29.95 cps (25°C) and a measured weight-average molecular weight of 321.

Example 3

In accordance with Example 1, with other conditions unchanged, the difference lied in that Raw material 1b was introduced in an amount of 13.2 g, to obtain Polymer 3c with a measured viscosity of 37.05 cps (25°C) and a measured weight-average molecular weight of 389.

Example 4

In accordance with Example 1, with other conditions unchanged, the difference lied in that Raw material 1b was

introduced in an amount of 17.6 g, to obtain Polymer 4c with a measured viscosity of 41.45 cps (25°C) and a measured weight-average molecular weight of 424.

Example 5

In accordance with Example 1, with other conditions unchanged, the difference lied in that Raw material 1b was introduced in an amount of 22.0 g, to obtain Polymer 5c with a measured viscosity of 55.70 cps (25°C) and a measured weight-average molecular weight of 499.

Example 6

In accordance with Example 1, with other conditions unchanged, the difference lied in that Raw material 1b was introduced in an amount of 35.2 g, to obtain Polymer 6c with a measured viscosity of 105.5 cps (25°C) and a measured weight-average molecular weight of 716.

Example 7

In accordance with Example 1, with other conditions unchanged, the difference lied in that Raw material 1b was introduced in an amount of 44.0 g and the reaction temperature was 130 °C, to obtain Polymer 7c with a measured viscosity of 304.5 cps (25°C) and a measured weight-average molecular weight of 907.

Example 8

In accordance with Example 1, with other conditions unchanged, the difference lied in that Raw material 1b was introduced in an amount of 13.2 g and the reaction pressure was 0.3 MPa, to obtain Polymer 8c with a measured viscosity of 37.2 cps (25°C) and a measured weight-average molecular weight of 387.

Example 9

In accordance with Example 1, with other conditions unchanged, the difference lied in that Raw material 1b was introduced in an amount of 17.6 g and the reaction temperature was 130 °C, to obtain Polymer 9c with a measured viscosity of 40.32 cps (25°C) and a measured weight-average molecular weight of 418.

Example 10

Raw material 1a' Raw material 1b' Polymer 1c'

To a 250 mL four-necked flask, 11.6 g of Raw material 1a' and 0.1 g of sodium hydroxide were added, and heated to 125 °C under stirring. After adjusting the pressure of the reaction system to 0.2 MPa, 5.8 g of Raw material 1b' was slowly introduced over about 30 min, and continued to stir for 2 h. Then the reaction was stopped to obtain a transparent liquid, that is, Polymer 1c'. The measured viscosity was 25.22 cps (25 °C) and the measured weight-average molecular weight was 289.

Example 11

In accordance with Example 10, with other conditions unchanged, the difference lied in that Raw material 1b' was introduced in an amount of 11.6 g, to obtain Polymer 2c' with a measured viscosity of 32.65 cps (25°C) and a measured weight-average molecular weight of 334.

Example 12

In accordance with Example 10, with other conditions unchanged, the difference lied in that Raw material 1b' was introduced in an amount of 17.4 g, to obtain Polymer 3c' with a measured viscosity of 39.55 cps (25°C) and a measured weight-average molecular weight of 401.

Example 13

In accordance with Example 10, with other conditions unchanged, the difference lied in that Raw material 1b' was introduced in an amount of 23.2 g, to obtain Polymer 4c' with a measured viscosity of 44.05 cps (25°C) and a measured weight-average molecular weight of 439.

Example 14

In accordance with Example 10, with other conditions unchanged, the difference lied in that Raw material 1b' was introduced in an amount of 29.0 g, to obtain Polymer 5c' with a measured viscosity of 60.07 cps (25°C) and a measured weight-average molecular weight of 515.

Example 15

In accordance with Example 10, with other conditions unchanged, the difference lied in that Raw material 1b' was introduced in an amount of 34.8 g, to obtain Polymer 6c' with a measured viscosity of 124.5 cps (25°C) and a measured weight-average molecular weight of 732.

Example 16

In accordance with Example 10, with other conditions unchanged, the difference lied in that Raw material 1b' was introduced in an amount of 46.4 g, to obtain Polymer 7c' with a measured viscosity of 312.5 cps (25°C) and a measured weight-average molecular weight of 1,011.

Example 17

In accordance with Example 10, with other conditions unchanged, the difference lied in that Raw material 1b' was introduced in an amount of 23.2 g and the reaction pressure was 0.3 MPa, to obtain Polymer 8c' with a measured viscosity of 48.37 cps (25°C) and a measured weight-average molecular weight of 441.

Example 18

In accordance with Example 10, with other conditions unchanged, the difference lied in that Raw material 1b' was introduced in an amount of 29.0 g and the reaction temperature was 100 °C, to obtain Polymer 9c' with a measured viscosity of 58.32 cps (25°C) and a measured weight-average molecular weight of 509.

Example 19

In accordance with Example 1, with other conditions unchanged, the difference lied in that the reaction temperature was 50 °C. It was detected that Raw material 1a was not reacted completely, and the subsequent detections were not carried out.

Example 20

In accordance with Example 1, with other conditions unchanged, the difference lied in that the reaction temperature was 180 °C, to obtain a product with 30.45 cps (25°C) and a weight-average molecular weight of 273, but the color of the product was yellow.

Example 21

In accordance with Example 1, with other conditions unchanged, the difference lied in that the pressure of the reaction system was adjusted to 0.05 MPa. It was detected that Raw material 1a was not reacted completely, and the

subsequent detections were not carried out.

**Performance evaluation**

Photocuring:

By preparing photocurable compositions with the formulations shown in Table 1, the photocurable application performances of the polymers represented by Formula (I) of the invention were evaluated.

Table 1

| Formulation / Component | Examples | | | | | | | | | | Comparative Examples | | | |
|---|---|---|---|---|---|---|---|---|---|---|---|---|---|---|
| | Formulation No. | | | | | | | | | | Formulation No. | | | |
| | 1 | 2 | 3 | 4 | 5 | 6 | 7 | 8 | 9 | 10 | 11 | 12 | 13 | 14 |
| 6110 | 49 | 49 | 49 | 49 | 49 | 49 | 49 | 49 | 49 | 49 | 49 | 49 | 49 | 49 |
| 1c | 49 | - | - | - | - | - | - | - | - | - | - | - | - | - |
| 3c | - | 49 | - | - | - | - | - | - | - | - | - | - | - | - |
| 5c | - | - | 49 | - | - | - | - | - | - | - | - | - | - | - |
| 7c | - | - | - | 49 | - | - | - | - | - | - | - | - | - | - |
| 8c | - | - | - | - | 49 | - | - | - | - | - | - | - | - | - |
| 9c | - | - | - | - | - | 49 | - | - | - | - | - | - | - | - |
| 2c’ | - | - | - | - | - | - | 49 | - | - | - | - | - | - | - |
| 5c’ | - | - | - | - | - | - | - | 49 | - | - | - | - | - | - |
| 6c’ | - | - | - | - | - | - | - | | 49 | - | - | - | - | - |
| 7c’ | - | - | - | - | - | - | - | | | 49 | - | - | - | - |
| Compound A | - | - | - | - | - | - | - | - | - | - | -49 | | - | - |
| Compound B | - | - | - | - | - | - | - | - | - | - | - | -49 | | - |
| Compound C | - | - | - | - | - | - | - | - | - | - | - | - | 49 | |
| Compound D | - | - | - | - | - | - | - | - | - | - | - | - | - | 49 |
| Photoinitiator PAG202 | 2 | 2 | 2 | 2 | 2 | 2 | 2 | 2 | 2 | 2 | 2 | 2 | 2 | 2 |

6110:

Compound A: ;

Compound B: ;

Compound C: a mixture of and (at a weight ratio of 1:1);

Compound D: (homemade by the process shown in Example 1 of JP2019023256A);

Photoinitiator: iodonium diphenyl hexafluorophosphate.

### 1. Curing speed

The photocurable composition was placed on a PET substrate and coated with a 25# bar to obtain a coating with a thickness of about 25 μm, and exposed in a crawler exposure machine (Model RW-UV20101, mercury lamp) to receive a radiation energy of 30 mJ/cm$^2$ per time. The minimum number of times required for each formulation to cure completely was recorded.

### 2. Hardness test

The photocurable composition was coated on a PET film with a thickness of 25 μm, and received a radiation energy of 200 mJ/cm$^2$ for fully curing. In accordance with the pencil hardness test evaluation standard as specified in GB/T 6739-2006, a pencil was inserted into the test instrument, and fixed with a clip to keep horizontal. The tip of the pencil was placed on the surface of the paint film, and pushed in a direction away from itself at a speed of 1 mm/s by a distance of at least 7 mm. If there was no scratch, the test was repeated in an untested area, by changing the pencil to one having a higher hardness until a scratch at least 3 mm long was occurred. The hardness of the hardest pencil that did not scratch the coating indicated the hardness of the coating.

### 3. Flexibility

The photocurable composition was coated on a tinplate sheet with a thickness of 25 μm, and received a radiation energy of 200 mJ/cm$^2$ for fully curing. In accordance with paint film flexibility test standard as specified in GB/T 1731-93, the outside of the tinplate sheet coated with cured coating was wound on the rod shafts of 10, 5, 4, 3, 2, 1 mm in turn along the length direction, and bent for 2-3 s, to observe using a magnifying glass. The diameter of the smallest rod shaft where the coating layer was damaged indicated the flexibility of the photocured coating.

### 4. Adhesion

The photocurable composition was coated on a PET film with a thickness of 25 μm, and received a radiation energy of 200 mJ/cm$^2$ for fully curing. In accordance with the paint film grid test evaluation standard as specified in GB/T 9286-1998, the coating film was cut into hundred of grids, wherein the tool nose should be sharp, and touch the substrate during cutting, at an angle of 45 degree to the coating film. The paint chips were removed using a soft brush, and a 3M scotch tape was stuck on the cut hundred of grids by applying a force such that the tape was stuck firmly to the surface and the grid areas of the coating film. Within 2 minutes, one end of the 3M tape was hold at an angle of 60 degree, and smoothly torn off within 1 second, to evaluate according to the following standards.

Level 0: The cut edge was completely smooth without falling off;
Level 1: There was a little coating peeling off at the intersection of incisions, with the affected cross-cut areas of significantly not greater than 5%;
Level 2: There was coating peeling off at the intersection of incisions and/or along the edge of incisions, with the affected areas of significantly greater than 5% but significantly not greater than 15%;
Level 3: The coating was partially or completely peeled off in large fragments along the cut edge, and/or partially or completely peeled off on different parts of the grids, with the affected cross-cut areas of significantly greater than 15% but significantly not greater than 35%;
Level 4: The coating was peeled off in large fragments along the cut edge, and/or some grids were partially or completely peeled off, with the affected cross-cut areas of significantly greater than 35% but significantly not greater than 65%;
Level 5: The degree for peeling off exceeded Level 4.

The performance test results are summarized in Table 2.

Table 2

| | | | Hardness | Flexibility | Adhesion |
|---|---|---|---|---|---|
| Examples | Formulation 1 | 2 | 4H | 1 | Level 0 |
| | Formulation 2 | 2 | 3H | 1 | Level 0 |
| | Formulation 3 | 1 | 3H | 1 | Level 0 |
| | Formulation 4 | 1 | 3H | 2 | Level 0 |
| | Formulation 5 | 1 | 3H | 2 | Level 0 |
| | Formulation 6 | 1 | 3H | 2 | Level 0 |
| | Formulation 7 | 1 | 3H | 2 | Level 0 |
| | Formulation 8 | 1 | 3H | 2 | Level 0 |
| | Formulation 9 | 1 | 3H | 2 | Level 0 |
| | Formulation 10 | 1 | 3H | 2 | Level 0 |
| Comparative examples | Formulation 11 | 2 | 4H | 1 | Level 0 |
| | Formulation 12 | 2 | 4H | 1 | Level 0 |
| | Formulation 13 | 2 | 4H | 2 | Level 0 |
| | Formulation 14 | 1 | 4H | 2 | Level 0 |

It can be seen from Table 2 that the oxetane-based polymer of the invention can be applied in the photocurable composition, and has comparable performances to the currently widely used hydroxy-containing oxetane monomer compounds.

Thermocuring:

By preparing thermocurable compositions with the formulations shown in Table 3, the thermocurable application performances of the polymers represented by Formula (I) of the invention were evaluated.

Table 3

| Raw Material No (Weight ratio) | Formulation No. | | | | | | | | |
|---|---|---|---|---|---|---|---|---|---|
| | 15 | 16 | 17 | 18 | 19 | 20 | 21 | 22 | 23 |
| 1c | 20 | | | | | | | | |
| 5c | | 20 | | | | | | | |
| 9c | | | 20 | | | | | | |
| 5c’ | | | | 20 | 20 | | | | |
| 6110 | | | | | | 20 | | | |
| Compound A | | | | | | | 20 | | |
| Compound C | | | | | | | | 20 | |
| Compound D | | | | | | | | | 20 |
| TAG50101 | 0.2 | 0.2 | 0.2 | 0.2 | | 0.2 | 0.2 | 0.2 | 0.2 |
| TAG50108 | | | | | 0.2 | | | | |
| TAG50101: 4-hydroxyphenylbenzylmethylsulfonium hexafluorophosphate<br>TAG50108: 4-hydroxyphenylbenzylmethylsulfonium tetrakis(pentafluorophenyl)borate | | | | | | | | | |

The above composition was formulated, coated on the tinplate with a bar, and placed in an oven at 80 °C for 2 hours, to observe its curing status. The thermocuring performances were evaluated according to the following standards, and the results are shown in Table 4:

1. Oily and not cured; 2. Oily surface and cured bottom; 3. Sticky surface, with relatively heavy fingerprints after touching;
4. Essentially dry surface, being slightly astringent and having light fingerprints after touching;
5. Fully cured, having smooth surface, and without fingerprints after touching.

Table 4

| | Formulation No. | | | | | | | | |
|---|---|---|---|---|---|---|---|---|---|
| | 15 | 16 | 17 | 18 | 19 | 20 | 21 | 22 | 23 |
| Curing status | | 5 | 5 | 5 | 5 | 3 | 4 | 5 | 4 |

It can be seen from Table 4 that the oxetane-based polymer of the invention can be applied in the thermocurable composition, and has relatively excellent curing performances.

Given the above, the oxetane-based polymer of the invention has a simple synthesis process having a high atom utilization rate and without halogen residues, has good application performances, and has an ideal prospect for commercial application.

## Claims

1. A low-viscosity oxetane-based polymer having a structure represented by Formula (I):

(I)

wherein $R_1$ represents hydrogen or methyl, and the weight-average molecular weight, measured as indicated in the description, of the polymer is between 250 and 1,100, and wherein the low-viscosity oxetane-based polymer has a viscosity at 25°C of 20-320 mPa*s (20-320 cps), measured as indicated in the description.

2. A method for preparing the low-viscosity oxetane-based polymer according to claim 1, **characterized in that**, the method for preparing the low-viscosity oxetane-based polymer includes: reacting 3-ethyl-3-hydroxymethyloxetane with oxirane substituted by $R_1$ under an alkaline condition;
with the reaction formula as shown below:

,

wherein $R_1$ is as defined in claim 1, and wherein the reaction temperature is 80-160 °C, and the reaction pressure is 0.01-0.5 MPa.

3. The method according to claim 2, **characterized in that**, the alkaline condition is achieved by adding one or a combination of two or more of sodium tert-butoxide, potassium tert-butoxide, sodium hydroxide, potassium hydroxide, sodium carbonate, and potassium carbonate to the reaction system.

4. Use of the low-viscosity oxetane-based polymer according to claim 1 in the field of energy curing.

5. The use according to claim 4, **characterized in that**, the energy curing process for the low-viscosity oxetane-based polymer is photocuring or thermocuring.

6. An energy-curable composition, **characterized in that**, the energy-curable composition comprises the oxetane-

based polymer according to claim 1.

7. The energy-curable composition according to claim 6, **characterized in that**, the energy curing process for the energy-curable composition is photocuring or thermocuring.

## Patentansprüche

1. Niedrigviskoses Polymer auf Oxetanbasis mit einer durch Formel (I) dargestellten Struktur:

(I)

wobei $R_1$ Wasserstoff oder Methyl ist, und das gewichtsmittlere Molekulargewicht des Polymers, gemessen wie in der Beschreibung angegeben, zwischen 250 und 1.100 liegt, und wobei das niedrigviskose Polymer auf Oxetanbasis eine Viskosität bei 25 °C von 20-320 mPa·s (20-320 cps) aufweist, gemessen wie in der Beschreibung angegeben.

2. Verfahren zum Herstellen des niedrigviskosen Polymers auf Oxetanbasis gemäß Anspruch 1, **dadurch gekennzeichnet, dass** das Verfahren zum Herstellen des niedrigviskosen Polymers auf Oxetanbasis einschließt: Umsetzen von 3-Ethyl-3-hydroxymethyloxetan mit durch $R_1$ substituiertem Oxiran unter einer alkalischen Bedingung;
mit der Reaktionsformel wie nachstehend gezeigt:

,

wobei $R_1$ wie in Anspruch 1 definiert ist, und wobei die Reaktionstemperatur 80-160 °C beträgt, und der Reaktionsdruck 0,01-0,5 MPa beträgt.

3. Verfahren gemäß Anspruch 2, **dadurch gekennzeichnet, dass** die alkalische Bedingung durch Hinzufügen von einem oder einer Kombination aus zwei oder mehr von Natrium-tert-butoxid, Kalium-tert-butoxid, Natriumhydroxid, Kaliumhydroxid, Natriumcarbonat und Kaliumcarbonat zu dem Reaktionssystem erreicht wird.

4. Verwendung des niedrigviskosen Polymers auf Oxetanbasis gemäß Anspruch 1 auf dem Gebiet der Energiehärtung.

5. Verwendung gemäß Anspruch 4, **dadurch gekennzeichnet, dass** der Energiehärtungsprozess für das niedrigviskose Polymer auf Oxetanbasis Photohärtung oder Thermohärtung ist.

6. Energiehärtbare Zusammensetzung, **dadurch gekennzeichnet, dass** die energiehärtbare Zusammensetzung das Polymer auf Oxetanbasis gemäß Anspruch 1 umfasst.

7. Energiehärtbare Zusammensetzung gemäß Anspruch 6, **dadurch gekennzeichnet, dass** der Energiehärtungsprozess für die energiehärtbare Zusammensetzung Photohärtung oder Thermohärtung ist.

## Revendications

1. Polymère à base d’oxétane à faible viscosité ayant une structure représentée par la Formule (I) :

(I)

où $R_1$ représente hydrogène ou méthyle, et le poids moléculaire moyen en poids, mesuré comme indiqué dans la description, du polymère est entre 250 et 1 100, et où le polymère à base d'oxétane à faible viscosité a une viscosité à 25 °C de 20 à 320 mPa*s (20 à 320 cps), mesurée comme indiqué dans la description.

**2.** Procédé de préparation du polymère à base d'oxétane à faible viscosité selon la revendication 1, **caractérisé en ce que** le procédé de préparation du polymère à base d'oxétane à faible viscosité comporte : la réaction de 3-éthyl-3-hydroxyméthyloxétane avec de l'oxirane substitué par du $R_1$ dans une condition alcaline ;
avec la formule de réaction présentée ci-dessous :

,

où $R_1$ est tel que défini dans la revendication 1, et où la température de réaction est de 80 à 160 °C, et la pression de réaction est de 0,01 à 0,5 MPa.

**3.** Procédé selon la revendication 2, **caractérisé en ce que** la condition alcaline est obtenue en ajoutant l'un, ou une combinaison de deux ou plus, parmi tert-butoxyde de sodium, tert-butoxyde de potassium, hydroxyde de sodium, hydroxyde de potassium, carbonate de sodium et carbonate de potassium au système de réaction.

**4.** Utilisation du polymère à base d'oxétane à faible viscosité selon la revendication 1 dans le domaine du durcissement par énergie.

**5.** Utilisation selon la revendication 4, **caractérisée en ce que** le processus de durcissement par énergie pour le polymère à base d'oxétane à faible viscosité est un photodurcissement ou thermodurcissement.

**6.** Composition durcissable par énergie, **caractérisée en ce que** la composition durcissable par énergie comprend le polymère à base d'oxétane selon la revendication 1.

**7.** Composition durcissable énergie selon la revendication 6, **caractérisée en ce que** le processus de durcissement par énergie pour la composition durcissable par énergie est un photodurcissement ou thermodurcissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110359249
- JP 2000302774 A
- WO 2007142236 A1
- JP 2019023256 A
- CN 112341617 A
- US 2008213568 A1
- JP 2010254893 A


### Non-patent literature cited in the description


- *Macromolecules*, 2005, vol. 38, 1640
- *GB/T 6739-2006*
- *GB/T 1731-93*
- *GB/T 9286-1998*